# FASCICULE DE BREVET EUROPEEN

(11) **EP 0 805 126 B1**
(45) Date de publication et mention de la délivrance du brevet: **13.06.2001**
(21) Numéro de dépôt: 97400981.3
(22) Date de dépôt: 30.04.1997
(51) Int. Cl.: C03C 17/04, C03C 8/02

(54) **Panneau de verre à rugosité accrue et son procédé de fabrication**
Glasscheibe mit erhöhter Rauheit und Verfahren zur Herstellung
Glass panel with increased roughness and process for its production

(30) Priorité: 03.05.1996 FR 9605582
(43) Date de publication de la demande: 05.11.1997
(73) Titulaire: SAINT-GOBAIN GLASS FRANCE, 92400 Courbevoie (FR)
(72) Inventeur: Bernheim, Isabelle, 75011 Paris (FR); Garnier, Jean-François, 92100 Boulogne Billancourt (FR); Wyart, Jean-Pierre, 59215 Abscon (FR)
(74) Mandataire: Renous Chan, Véronique

(56) Documents cités:
- EP-A- 0 513 707
- EP-A- 0 555 849
- EP-A- 0 700 878
- FR-A- 2 395 328
- GB-A- 1 103 078
- DATABASE WPI Week 01 Derwent Publications Ltd., London, GB; AN 87-002538 XP002023021 & JP 61 262 149 A (SHINO TOSEKI KK) , 19 Novembre 1986
- DATABASE WPI Week 23 Derwent Publications Ltd., London, GB; AN 94-188816 XP002023022 & JP 06 128 066 A (INAX KK) , 10 Mai 1994
- DATABASE WPI Week 12 Derwent Publications Ltd., London, GB; AN 89-092023 XP002023023 & SU 1 423 976 A (GRUZNIISTROM CONS. M.) , 15 Septembre 1988
- DATABASE WPI Week 02 Derwent Publications Ltd., London, GB; AN 92-022789 XP002023024 & SU 1 629 265 A (BELO PROGRESS EQUIP) , 23 Février 1991

## Description

La présente invention concerne un panneau de verre pourvu sur toute ou partie de sa surface d'un revêtement à rugosité plus importante que le verre nu, ainsi que son procédé de fabrication.

Les panneaux de verre sont résistants et aptes à constituer des planchers, des marches d'escalier, des dalles de balcons, mais ils peuvent être glissants, en particulier s'ils sont humides, et pour certaines utilisations, il est impératif de renforcer leur rugosité de façon à les rendre antidérapants.

Pour ce faire, il est connu d'y coller de place en place des bandes ou des plots à surface rugueuse, mais ceux-ci s'usent ou se décollent à l'usage.

Il est également connu par le document de brevet EP 0 513 707 un panneau en verre pourvu d'un revêtement de surface constitué d'une fritte de verre contenant des particules à arêtes vives, déposé, puis cuit sur le verre ; ces particules à arêtes vives étant des grains du groupe des silicates ou des oxydes métalliques, par exemple Al₂O₃, y compris des mélanges entre ces derniers et/ou avec un oxyde de silicium par exemple de la pierre ponce.
Il est prévu qu'un tel panneau en verre avec des grains à arêtes vives collés sur le verre avec une fritte de verre fondue, présente un coefficient de frottement élevé. Cependant, il a été constaté que ces grains à arêtes vives d'une part pouvaient présenter un certain danger du fait justement de leurs arêtes trop vives, d'autre part pouvaient se dessertir de la gangue adhésive en fritte de verre fondue qui les collait sur le panneau de verre. Dans ce second cas, il en résultait des cratères vides du grain à arêtes vives, cratères qui présentent des arêtes vives susceptibles de blesser d'une part, et qui retiennent les salissures d'autre part. Ainsi donc, ces surfaces antidérapantes selon le document de brevet déjà cité EP 0 513 707, certes parfaitement antidérapantes lorsqu'elles seront neuves, ne conviennent pas essentiellement parce qu'elles ne résistent pas à l'usure.

Le but de la présente invention est alors d'obtenir un panneau de verre à caractéristiques de rugosité satisfaisantes pour conférer des propriétés antidérapantes, ou autrement dit de glissance données stables dans le temps, insensibles à l'usure, sans arêtes trop vives risquant de blesser et facilement nettoyable.

Le document GB-A-1 103 078 décrit une poudre d'émail comprenant des particules de fritte de verre comprenant principalement du plomb, de la silice et du bore.

Pour ce faire, l'invention a pour objet un panneau de verre comportant au moins une feuille de verre dont au moins une de ses faces présente au moins une zone rugueuse munie d'un revêtement à base d'une fritte de verre. Selon l'invention, la rugosité de ladite (desdites) zone(s) rugueuse(s) est déterminée par les particules de ladite fritte de verre de base.

Par " zone rugueuse ", il faut comprendre ici et dans la suite du texte, une zone à rugosité accrue par rapport à la surface de la feuille de verre nue.

De même, par " fritte ", il faut comprendre ici et dans la suite du texte, une composition vitrifiable sous forme de poudre et à base d'oxydes dont éventuellement des pigments.

Enfin, dans le cadre de l'invention, il faut comprendre par " les particules de la fritte de base", les particules provenant de la poudre qui ont d'une part suffisamment fondu pour adhérer à la surface dudit panneau de verre, et d'autre part insuffisamment fondu pour s'être réunis en une couche lisse et/ou de manière à présenter des contours arrondis. Ainsi, on entend par " déterminée par ", le fait que la rugosité dépende directement de la taille des particules, taille qui n'est donc pas nécessairement égale à la granulométrie initiale des particules de la poudre.

L'invention, telle que définie, confère à la feuille de verre du panneau un coefficient de frottement dynamique augmenté d'au moins 25 % par rapport à celui de la même feuille de verre nue.

On précise que le coefficient de frottement dynamique mesuré à l'aide d'un pendule de frottement, permet d'apprécier la rugosité d'une surface.
Aussi, en fonction du taux de recouvrement de la feuille de verre par la (les) zone(s) rugueuse(s) on peut « moduler » en quelque sorte la rugosité de la feuille de verre du panneau selon l'invention.

Pour parvenir à l'invention, le revêtement est à base d'au moins une fritte de verre choisie pour que sa température moyenne de cuisson soit inférieure à la température de traitement thermique de la feuille de verre d'un maximum de 100°C et de préférence de seulement environ 70°C, le temps de traitement thermique ne s'écartent pas de plus de 15 % d'un temps de 40 secondes par mm d'épaisseur du support verrier. Dans le cadre de l'invention, il faut comprendre, par température « inférieure », « moyenne », « de fin » de cuisson, respectivement la valeur inférieure, moyenne et supérieure de l'intervalle de températures dans lequel la fritte de verre de base est apte à cuire.

On entend ainsi par température inférieure de cuisson, la température de ramollissement de la fritte de verre de base.

De même, on entend par température de fin de cuisson la température de fusion de la fritte de verre de base.

La granulométrie des particules de fritte de verre peut être adaptée pour faire varier les caractéristiques de rugosité de la (des) feuille(s) de verre, mais elle est en général supérieure à 100 micromètres (µm) et notamment de l'ordre de 200 µm, de préférence comprise entre 250 et 400 *µ*m.
La rugosité de la(des) feuille(s) de verre varie également avec la nature de la fritte de verre choisie. Plus la fritte de verre est réfractaire, tout en ayant des caractéristiques de température de cuisson notées précédemment, plus la rugosité est élevée. Ainsi, on choisit parmi les frittes de verre possibles et disponibles chez les fabricants de frittes et d'émaux, une fritte dont la température de début de cuisson soit inférieure de 60 à 120°C à la température de traitement thermique du verre et de préférence de l'ordre de 90°C et la température de fin de cuisson soit seulement inférieure de 10 à 50°C de la température de traitement thermique.

Le revêtement conférant la rugosité accrue peut également incorporer des pigments, classiques dans le domaine des métaux, et qui conféreront audit revêtement les couleurs souhaitées, à savoir notamment Cr₂O₃, Co₃O₄, NiO ... ou une opacité accrue avec TiO₂.

Différentes frittes de verre pourront être associées pour constituer le revêtement à rugosité accrue. Ainsi, à la fritte de base ayant les caractéristiques de température déjà indiquées, on ajoute une fritte additionnelle à température de fusion plus basse que celle de la fritte de base. Un tel système à plusieurs frittes permet de choisir une fritte de base relativement réfractaire, à peine ramollie à la température de traitement thermique de la (des) feuille(s) de verre, sans malgré tout pénaliser l'adhésion à ladite (auxdites) feuille(s) de verre dans la mesure où une autre fritte plus fusible renforce l'adhésion des particules de la fritte de base sur le panneau.

Pour beaucoup d'usages, la (les) feuille(s) de verre selon l'invention est (sont) trempée(s) thermiquement et dans ce cas, le traitement thermique dont il a été question jusqu'alors est le traitement thermique du verre en vue de sa (leur) trempe.

Pour d'autres usages la (les) feuille(s) de verre n'a (ont) pas besoin d'être trempée(s); dans ce cas, le traitement thermique évoqué jusqu'alors et qui sert à constituer le revêtement à rugosité accrue et en particulier à le cuire et à le coller sur la (les) feuille(s) de verre, est un traitement spécifique. Dans ce dernier cas, il est possible soit de sélectionner la ou les frittes de verre entrant dans la composition du revêtement à rugosité accrue en fonction d'une température de traitement qu'on se fixe soit l'inverse.

Pour réaliser une feuille de verre à revêtement rugueux sur toute ou partie de sa surface : on dépose d'abord un médium organique sur les zones à revêtir, on distribue sur la feuille de verre les particules des constituants du revêtement à savoir la fritte de base, frittes additionnelles éventuelles, pigments éventuels, on élimine les excès de constituants du revêtement non retenus par le médium organique, notamment par soufflage ou moyen équivalent, on soumet la feuille de verre à un traitement thermique dont la température est supérieure à la température de fusion de la fritte de verre de base.

Il faut noter que selon le procédé de l'invention, on fait jouer un rôle tout à fait surprenant au médium organique par rapport à celui qui lui est habituellement dévolu.

En effet, dans les procédés connus d'émaillage à la surface d'une feuille de verre, le médium organique est mélangé initialement à la fritte de verre de base et son rôle est de « napper » la poudre uniformément aux endroits voulus de la feuille de verre.

Ici, le médium organique permet de retenir sur la feuille de verre les particules notamment de fritte de verre de base, préalablement au traitement thermique, lesdites particules étant donc fix ées par le médium dont la viscosité est choisie élevée....

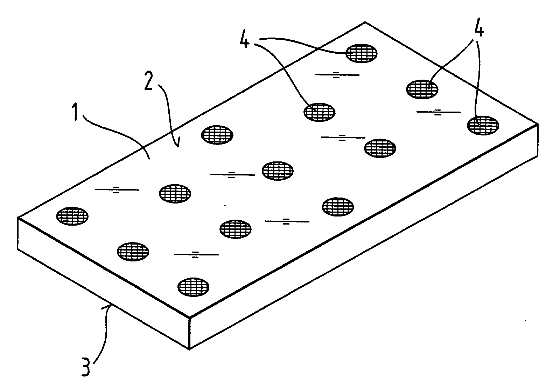

L'invention sera décrite ci-après plus en détail en référence à la figure unique jointe qui représente un panneau en verre selon l'invention ayant des zones à rugosité accrue.

Ainsi, une feuille de verre 1 du panneau possède sur au moins une de ses surfaces 2 et 3, par exemple la surface 2, une ou des zones 4 à rugosité accrue conférant audit panneau des propriétés notamment antidérapantes ou autrement dit de glissance particulières.

La surface 2 entière peut être rendue rugueuse, ou seulement des zones 4 en forme de bandes, plots, de formes géométriques ou non, variées ou toutes identiques, réparties régulièrement ou de façon quelconque peuvent être revêtues pour acquérir cette caractéristique. La figure montre une répartition régulière de plots 4 de forme circulaire sur la surface 2. Le panneau peut être un verre monolithique ou un ensemble de verres feuilletés avec intercalation d'une matière plastique, ou un feuilleté associant des plaques de verre et des plaques de matière plastique.

La feuille de verre 1 du panneau peut être en verre trempé, ou un verre simplement recuit ou un verre durci. Il peut s'agir d'un verre clair ou coloré dans sa masse.

Pour ce qui concerne l'invention, quelle que soit la constitution du panneau comportant au moins une feuille de verre 1 avec au moins une surface avec une rugosité accrue, il importera de savoir si l'ensemble du panneau est apte à subir le traitement thermique nécessaire pour l'obtention du revêtement rugueux ou si au contraire compte tenu notamment de certains constituants organiques, de certains revêtements constitutifs dudit panneau, il est nécessaire de réaliser le revêtement rugueux d'abord sur la plaque de verre 1 seule, quitte ensuite à assembler, traiter cette plaque de verre 1 rendue rugueuse pour obtenir le panneau final apportant en outre d'autres fonctions.

Ainsi donc, si le panneau est un panneau composite verre/plastique, tous les traitements postérieurs à l'obtention de la rugosité ne devront pas affecter celle-ci, en particulier ne devront pas s'effectuer à des températures susceptibles d'agir sur ladite rugosité.

Pour obtenir des rugosités selon l'invention, sur un panneau en verre, on dépose d'abord sur ladite feuille 1 dudit panneau un médium organique, classiquement utilisé comme liant dans les émaux, dans la ou les zones 4 choisies, par exemple par sérigraphie. Ce médium permettra de retenir sur le verre les particules notamment de fritte de verre, avant le traitement thermique.

Il devra également se consumer lors du traitement thermique. Classiquement le médium peut comporter des solvants, des diluants, des huiles telles que des huiles de pin et autres huiles végétales, des résines telles que des résines acryliques, des fractions de pétrole, des matières cellulosiques...

Avantageusement pour éviter les coulures d'une part, pour permettre au médium de mieux fixer les particules de fritte de verre avant traitement thermique d'autre part, on choisit de préférence pour ce médium une viscosité correspondant à une consistance "crémeuse" soit de l'ordre de 80 à 140 poises, de préférence de 90 à 130 poises et même de 100 à 120 poises.

Ensuite, on distribue sur la surface 2 de la feuille du panneau 1 le ou les éléments constitutifs in fine de la rugosité, à savoir essentiellement ou exclusivement des particules de la fritte de verre de base dont la température moyenne de cuisson est inférieure à la température de traitement thermique de la feuille de verre 1 d'un maximum de 100°C, de préférence de l'ordre de seulement 70°C. La granulométrie de ces particules peut être adaptée en fonction de l'effet recherché ; elle est choisie pour être en général supérieure à 100 µm, notamment de l'ordre de 200 µm. Il est également possible de faire varier la « glissance » en mixant différentes granulométries par exemple 250 à 400 µm avec des particules plus fines de l'ordre de 20 à 60 µm.

Cette fritte de base doit présenter des caractéristiques de température de fusion et de température de ramollissement ou autrement dit de fin et début de cuisson qui soient proches de la température du traitement thermique que l'on effectuera. Un écart de l'ordre de 40°C s'observe fréquemment entre ces deux températures de début et de fin de cuisson d'une fritte de verre. Lorsque, comme exigé dans beaucoup d'applications des panneaux selon l'invention est requis un traitement thermique, lequel se pratique à une température généralement de l'ordre de 600/630°C, on choisit une fritte de verre de base telle que sa température de ramollissement est comprise entre 500 et 560°C et de préférence entre 520 et 540°C, et sa température de fin de cuisson est comprise entre 560 et 600°C et de préférence autour de 580°C.

A temps de traitement thermique égal, plus l'écart entre la température de ramollissement de la fritte et la température de traitement thermique est faible, plus la rugosité est en principe élevée.

Ainsi qu'il est connu, la fritte de verre de base contient des oxydes formateurs tels la silice SiO₂, pour former les constituants essentiels du réseau vitreux, des oxydes modificateurs tels que CaO, K₂O, Na₂O, Fe₂O₃, Cr₂O₃, CO₃O₄, MnO, NiO, CuO, MoO₃, BaO capables de modifier le réseau vitreux et d'influer sur le point de fusion, et des oxydes intermédiaires tels Bi₂O₃, TiO₂, PbO jouant selon leur environnement et leurs proportions le rôle d'oxyde formateur et/ou d'oxyde modificateur.

En jouant sur les rapports entre oxydes intermédiaires et oxydes formateurs et sur la quantité d'oxydes modificateurs on choisit la fritte ayant les caractéristiques de température adaptées à l'invention.

Ainsi, une fritte contenant des oxydes intermédiaires tels PbO, des oxydes formateurs tels SiO₂, et des oxydes modificateurs sensiblement dans les mêmes proportions présente des caractéristiques de températures appropriées.

La fritte de verre de base particulièrement préférée comprend, en pourcentages pondéraux, les éléments suivants :

| | |
|---|---|
| PbO | 50 - 70 % |
| CdO | 5 - 10% |
| SiO₂ | 25 - 50 % |
| B₂O₃ | 2,5 - 5 % |
| TiO₂ | 2,5 - 5 % |
| Na₂O | 2,5 - 5 % ; |

le pourcentage pondéral élevé de l'oxyde de plomb améliorant encore l'adhésion sur la feuille de verre 1.

Les particules de fritte distribuées sont pour certaines retenues par le médium ; les autres sont éliminées par exemple par soufflage ou en retournant la feuille de verre 1 du panneau pour orienter sa face 2 vers le bas.

Le panneau est ensuite enfourné pour traitement thermique, soit traitement thermique spécifique pour obtenir le ramollissement des particules de fritte de verre et leur collage sur le verre ainsi que la destruction du médium, ou traitement servant en même temps à autre chose en particulier à la trempe thermique du verre. Ainsi un traitement de l'ordre de 630°C pendant un temps de l'ordre de 30 à 60 secondes par mm d'épaisseur de la plaque de verre conviendra.

Pour la fixation des particules de fritte de verre sur le panneau en matériau verrier, la nature de la (ou des) fritte(s) de verre d'une part, le temps de traitement thermique et la température d'autre part importent et peuvent varier; ce qui importe, c'est de choisir la fritte de verre, le temps, la température pour que la fritte de verre soit, du fait de ce traitement thermique suffisamment ramollie pour coller au panneau verrier, mais malgré tout pas trop fondue pour que ladite fritte de verre n'ait pas flué, ne se soit pas trop aplatie jusqu'à supprimer toute aspérité et tout relief conférant les propriétés d'anti-glissance.

Une fritte de verre cuisant entre 540 et 580°C, séjournant 40 secondes par mm d'épaisseur sur la plaque de verre 1 à une température de 600/630°C convient.

A la sortie du traitement thermique, le panneau de verre peut être trempé thermiquement, ou simplement refroidi.

Le panneau ainsi obtenu présente des rugosités qui résistent à l'abrasion (selon norme NF EN 154, le seuil d'usure n'apparaît qu'entre 300 et 450 cycles, ce qui classe le produit dans la classe PEI n° 2) qui résistent au gel, qui résistent comme le verre lui-même aux taches, aux acides et aux bases.

En outre, on a mesuré le coefficient de frottement dynamique, à l'aide d'un pendule de frottement, selon les normes NF P.18578 et NF P.90106. Ce coefficient permet d'apprécier la rugosité de la surface 2 du panneau. On a obtenu les résultats suivants :
- lorsque les zones 4 à rugosité accrue sont uniformément réparties en recouvrant la moitié de la surface 2, celle-ci présente un coefficient de frottement dynamique augmenté de 33 % par rapport à celui de la feuille de verre 1 nue.
- lorsque les zones 4 à rugosité accrue recouvrent totalement la surface 2, celle-ci présente un coefficient de frottement dynamique augmenté de 50 % par rapport à celui de la feuille de verre 1 nue.

Ces rugosités rendent le panneau antidérapant apte à l'usage pour différents types de sols, voies piétonnes, sols sportifs (courts de tennis, salles sportives) piscines, centres commerciaux, halls de gare, sols industriels, marches d'escalier, pistes de danse, etc.

Compte tenu de la transparence des panneaux de verre, il est possible aussi de réaliser des effets spéciaux d'éclairage en créant sous ces panneaux des caissons éclairés. On peut aussi obtenir des effets esthétiques particuliers en jouant sur la couleur du verre lui-même ou sur la couleur de couches additionnelles déposées sur l'une ou l'autre face du verre, sur les reflets du verre, ou l'absence de reflets due à un traitement spécial anti-reflets du verre, sur l'opacité, la transparence et/ou la couleur des zones rugueuses résultant de la composition particulière des frittes de verre.

Toutes les rugosités d'un même panneau peuvent être identiques, ou au contraire différentes en variant notamment la nature de la fritte de base, ou seulement sa granulométrie d'une zone 4 à l'autre.

Les panneaux à rugosité accrue peuvent être en verre simplement recuit, en verre trempé, en verre feuilleté avec d'autres plaques de verre ou de matières plastiques. Le montage de ces panneaux à rugosité accrue ne pose pas de problème particulier ; leur fixation, collage, se fait comme s'il s'agissait de panneaux de verre simple.

## Revendications

1. Panneau de verre comportant au moins une feuille de verre (1) dont au moins une de ses faces (2) présente au moins une zone rugueuse (4) munie d'un revêtement à base d'une fritte de verre **caractérisé en ce que** la rugosité de ladite (desdites) zone(s) rugueuse(s) (4) est déterminée par les particules de ladite fritte de verre de base.

2. Panneau de verre selon la revendication 1, **caractérisé en ce que** ladite feuille de verre (1) a subi un traitement thermique, de préférence une trempe.

3. Panneau de verre selon la revendication 1 ou 2, **caractérisé en ce que** ledit revêtement comporte au moins une fritte de verre additionnelle dont la température de fusion est moins élevée que celle de la fritte de base.

4. Panneau de verre selon l'une des revendications précédentes, **caractérisé en ce que** ladite (lesdites) zone(s) rugueuse(s) (4) est (sont) colorée(s) et/ou opacifiée(s).

5. Panneau de verre selon l'une des revendications précédentes, **caractérisé en ce qu**'il comporte plusieurs zones rugueuses (4) qui recouvrent partiellement ladite face (2) de ladite feuille de verre (1), de préférence 50 % de sa surface.

6. Panneau de verre selon la revendication 6, **caractérisé en ce que** lesdites zones rugueuses (4) sont ou non uniformément réparties.

7. Panneau de verre selon la revendication 6 ou 7 , **caractérisé en ce qu**'au moins une desdites zones rugueuses (4) a une forme géométrique précise, notamment un plot circulaire.

8. Panneau de verre selon l'une des revendications 5 à 7, **caractérisé en ce que** ladite feuille de verre (1) présente un coefficient de frottement dynamique augmenté, d'au moins 25 %, notamment d'environ 33 % par rapport à celui de ladite feuille de verre (1) nue.

9. Panneau de verre selon l'une des revendications 1 à 4, **caractérisé en ce qu**'il comporte une seule zone rugueuse (4) qui recouvre totalement ladite face (2) de ladite feuille de verre (1).

10. Panneau de verre selon la revendication 9, **caractérisé en ce que** ladite feuille de verre (1) présente un coefficient de frottement dynamique augmenté d'environ 50 % par rapport à celui de ladite feuille de verre (1) nue.

11. Procédé de fabrication du panneau selon l'une des revendications précédentes **caractérisé en ce qu'on** réalise les étapes suivantes :
a) On dépose sur la feuille de verre (1) un médium dans la ou les zones où l'on veut obtenir la rugosité,
b) On distribue sur la feuille de verre (1) les particules des constituants du revêtement à savoir essentiellement la fritte de verre de base,
c) On élimine les excès de particules des constituants non adhérés par le médium,
d) On effectue un traitement thermique de la feuille de verre (1), notamment de manière à ramollir les particules de fritte et les faire adhérer à ladite feuille de verre (1).

12. Procédé selon la revendication 11, **caractérisé en ce** qu'on choisit une viscosité du médium comprise entre 80 à 140 poises, notamment entre 90 et 130 poises et de préférence entre 100 et 120 poises.

13. Procédé selon la revendication 11 ou 12, **caractérisé en ce qu**'on ajoute à ladite fritte de verre de base au moins une fritte de verre additionnelle dont la température de fusion est moins élevée que celle de la fritte de base.

14. Procédé selon l'une des revendications 11 à 13, **caractérisé en ce qu**'on effectue le traitement thermique de la feuille de verre en vue de sa trempe.

15. Procédé selon la revendication 14, **caractérisé en ce qu**'on effectue le traitement thermique à une température de l'ordre de 630°C.

16. Procédé selon l'une des revendications 11 à 15, **caractérisé en ce qu**'on effectue le traitement thermique pendant un temps de traitement compris entre 34 s et 46 s, de préférence 40 s par mm d'épaisseur de la feuille de verre.

17. Procédé selon l'une des revendications 11 à 16, **caractérisé en ce qu**'on mélange des particules à granulométries différentes.

18. Procédé selon l'une des revendications 11 à 17, **caractérisé en ce qu**'on utilise une fritte de verre de base qui présente une température moyenne de cuisson inférieure à la température de traitement thermique de la feuille de verre d'un maximum de 100°C, et de préférence de l'ordre de seulement 70°C.

19. Procédé selon l'une quelconque des revendications 11 à 18 , **caractérisé en ce que** la fritte de verre de base présente une température de ramollissement inférieure de 60 à 120°C à la température de traitement thermique du verre et de préférence de l'ordre de 90°C **et en ce qu'**elle présente une température de fin de cuisson seulement inférieure de 10 à 50°C à la température de traitement thermique.

20. Procédé selon l'une quelconque des revendications 11 à 19, **caractérisé en ce que** la fritte de verre de base présente une température moyenne de cuisson comprise entre 500 et 600°C, de préférence entre 540° et 580°C.

21. Procédé selon l'une quelconque des revendications 11 à 20, **caractérisé en ce que** la fritte contient en proportions sensiblement égales des oxydes formateurs du type SiO₂ et des oxydes modificateurs.

22. Fritte de verre de base utilisée pour la mise en oeuvre du procédé selon l'une quelconque des revendications 11 à 21, **caractérisée en ce que** la fritte présente une température moyenne de cuisson inférieure à la température de traitement thermique de la feuille de verre d'un maximum de 100°C, et de préférence de l'ordre de seulement 70°C, et **en ce que** la fritte présente une granulométrie de ses particules supérieure à 100 µm, notamment à 200 µm, de préférence comprise entre 250 et 400 µm.

23. Fritte de verre de base utilisée pour la mise en oeuvre du procédé selon l'une quelconque des revendications 11 à 21, **caractérisée en ce que** la fritte présente une température moyenne de cuisson inférieure à la température de traitement thermique de la feuille de verre d'un maximum de 100°C, et de préférence de l'ordre de seulement 70°C, et **en ce que** la fritte comprend en pourcentages pondéraux, les éléments suivants :
| | |
|---|---|
| PbO | 50 - 70% |
| CdO | 5-10% |
| SiO₂ | 25 -50% |
| B₂O₃ | 2,5 - 5% |
| TiO₂ | 2,5 - 5% |
| Na₂O | 2,5 - 5% |

24. Fritte de verre de base selon la revendication 23, **caractérisée en ce que** la fritte présente une granulométrie de ses particules supérieure à 100 µm notamment à 200 µm, de préférence comprise entre 250 et 400 µm.

25. Fritte de verre de base selon l'une des revendications 22 à 24, **caractérisée en ce qu**'elle présente une température moyenne de cuisson comprise entre 500 et 600°C, de préférence entre 540 et 580°C.

26. Utilisation d'une fritte de verre pour former, sur au moins une zone d'au moins une des faces d'un panneau de verre, un revêtement rugueux, dans laquelle on détermine la rugosité de la ou les zone(s) rugueuse(s) par les particules de la fritte de verre.

27. Utilisation selon la revendication 26 d'une fritte de verre de base dont les caractéristiques sont mentionnées à l'une quelconque des revendications 22 à 25.

28. Utilisation du panneau selon l'une quelconque des revendications 1 à 10, en tant que dalle antidérapante, notamment pour planchers, marches d'escalier, piste de danse, sol pour voie piétonne, sol de douche ou piscine, sol industriel.

## Patentansprüche

1. Glasfeld, das wenigstens eine Glasscheibe (1) enthält, wovon mindestens eine der Seiten (2) mindestens einen aufgerauhten Bereich (4) aufweist, der mit einer Beschichtung auf der Basis einer Glasfritte versehen ist, **dadurch gekennzeichnet, dass** die Rauhtiefe des/der aufgerauhten Bereichs/Bereiche (4) von den Teilchen der Basisglasfritte bestimmt wird.

2. Glasfeld nach Anspruch 1, **dadurch gekennzeichnet, dass** die Glasscheibe (1) einer Wärmebehandlung, vorzugsweise einem Vorspannvorgang, unterworfen worden ist.

3. Glasfeld nach Anspruch 1 oder 2, **dadurch gekennzeichnet, dass** die Beschichtung mindestens eine zusätzliche Glasfritte enthält, deren Schmelztemperatur niedriger als die der Basisglasfritte ist.

4. Glasfeld nach einem der vorhergehenden Ansprüche, **dadurch gekennzeichnet, dass** der/die aufgerauhte/n Bereich/e (4) gefärbt und/oder undurchsichtig gemacht worden ist/sind.

5. Glasfeld nach einem der vorhergehenden Ansprüche, **dadurch gekennzeichnet, dass** es mehrere aufgerauhte Bereiche (4) enthält, welche die Seite (2) der Glasscheibe (1) teilweise, vorzugsweise zu 50 % ihrer Fläche, bedecken.

6. Glasfeld nach Anspruch 5, **dadurch gekennzeichnet, dass** die aufgerauhten Bereiche (4) gegebenenfalls gleichmäßig verteilt sind.

7. Glasfeld nach Anspruch 6 oder 7, **dadurch gekennzeichnet, dass** mindestens einer der aufgerauhten Bereiche (4) eine genaue geometrische Form hat und insbesondere kreisförmig ist.

8. Glasfeld nach einem der Ansprüche 5 bis 7, **dadurch gekennzeichnet, dass** die Glasscheibe (1) einen dynamischen Reibungskoeffizienten aufweist, der mindestens 25 % und insbesondere etwa 33 % höher als derjenige der unbeschichteten Glasscheibe (1) ist.

9. Glasfeld nach einem der Ansprüche 1 bis 4, **dadurch gekennzeichnet, dass** es einen einzigen aufgerauhten Bereich (4) enthält, der die Seite (2) der Glasscheibe (1) vollständig bedeckt.

10. Glasfeld nach Anspruch 9, **dadurch gekennzeichnet, dass** die Glasscheibe (1) einen dynamischen Reibungskoeffizienten aufweist, der etwa 50 % höher als derjenige der unbeschichteten Glasscheibe (1) ist.

11. Verfahren zur Herstellung des Glasfeldes nach einem der vorhergehenden Ansprüche, **dadurch gekennzeichnet, dass** die Stufen:
a) Aufbringen eines Mittels auf die Glasscheibe (1) in dem/ den Bereich/en, in welchem/welchen die Rauhigkeit erhalten werden soll,
b) Verteilen der Teilchen der Bestandteile der Beschichtung, nämlich im Wesentlichen der Basisglasfritte, auf der Glasscheibe (1),
c) Entfernen der überschüssigen Teilchen der nicht anhaftenden Bestandteile durch das Mittel und
d) Wärmebehandlung der Glasscheibe (1), insbesondere so, dass die Frittenteilchen erweicht werden und an der Glasscheibe (1) anhaften, durchgeführt werden.

12. Verfahren nach Anspruch 11, **dadurch gekennzeichnet, dass** eine Viskosität des Mittels von 80 bis 140 Poise, insbesondere zwischen 90 und 130 Poise, und vorzugsweise zwischen 100 und 120 Poise gewählt wird.

13. Verfahren nach Anspruch 11 oder 12, **dadurch gekennzeichnet, dass** der Basisglasfritte mindestens eine zusätzliche Glasfritte zugesetzt wird, deren Schmelztemperatur niedriger als diejenige der Basisglasfritte ist.

14. Verfahren nach einem der Ansprüche 11 bis 13, **dadurch gekennzeichnet, dass** die Wärmebehandlung der Glasscheibe ein Vorspannvorgang ist.

15. Verfahren nach Anspruch 14, **dadurch gekennzeichnet, dass** die Wärmebehandlung bei einer Temperatur von etwa 630 °C durchgeführt wird.

16. Verfahren nach einem der Ansprüche 11 bis 15, **dadurch gekennzeichnet, dass** die Wärmebehandlung einen Zeitraum von 34 bis 46 s und vorzugsweise 40 s pro mm Dicke der Glasscheibe durchgeführt wird.

17. Verfahren nach einem der Ansprüche 11 bis 16, **dadurch gekennzeichnet, dass** Teilchen mit unterschiedlichen Korngrößen miteinander vermischt werden.

18. Verfahren nach einem der Ansprüche 11 bis 17, **dadurch gekennzeichnet, dass** eine Basisglasfritte verwendet wird, die eine mittlere Sintertemperatur aufweist, die höchstens 100 °C und vorzugsweise nur etwa 70 °C niedriger als die Wärmebehandlungstemperatur der Glasscheibe ist.

19. Verfahren nach einem der Ansprüche 11 bis 18, **dadurch gekennzeichnet, dass** die Basisglasfritte eine Erweichungstemperatur aufweist, die 60 bis 120 °C und vorzugsweise etwa 90 °C niedriger als die Wärmebehandlungstemperatur des Glases ist, **und** **dass** ihre Sinterendtemperatur nur 10 bis 50 °C niedriger als die Wärmebehandlungstemperatur ist.

20. Verfahren nach einem der Ansprüche 11 bis 19, **dadurch gekennzeichnet, dass** die Basisglasfritte eine mittlere Sintertemperatur von 500 bis 600 °C und vorzugsweise zwischen 540 und 580 °C aufweist.

21. Verfahren nach einem der Ansprüche 11 bis 20, **dadurch gekennzeichnet, dass** die Fritte in etwa gleichen Teilen glasbildende Oxide wie SiO₂ und modifizierende Oxide enthält.

22. Basisglasfritte, welche für die Durchführung des Verfahrens nach einem der Ansprüche 11 bis 21 verwendet wird, **dadurch gekennzeichnet, dass** die mittlere Sintertemperatur der Fritte höchstens 100 °C und vorzugsweise nur etwa 70 °C niedriger als die Wärmebehandlungstemperatur der Glasscheibe ist, **und dass** die Korngröße der Teilchen der Fritte mehr als 100 µm, insbesondere mehr als 200 um, und vorzugsweise 250 bis 400 um beträgt.

23. Basisglasfritte, welche für die Durchführung des Verfahrens nach einem der Ansprüche 11 bis 21 verwendet wird, **dadurch gekennzeichnet, dass** die mittlere Sintertemperatur der Fritte höchstens 100 °C und vorzugsweise nur etwa 70 °C niedriger als die Wärmebehandlungstemperatur der Glasscheibe ist, **und dass** die Fritte in Gewichtsprozenten folgende Bestandteile umfasst:
| | | |
|---|---|---|
| PbO | 50 bis | 70 %, |
| CdO | 5 bis | 10 %, |
| SiO₂ | 25 bis | 50 %, |
| B₂O₃ | 2,5 bis | 5 %, |
| TiO₂ | 2,5 bis | 5 %, |
| Na₂O | 2,5 bis | 5 %. |

24. Basisglasfritte nach Anspruch 23, **dadurch gekennzeichnet, dass** die Korngröße der Teilchen der Fritte mehr als 100 um, insbesondere mehr als 200 um, und vorzugsweise 250 bis 400 µm beträgt.

25. Basisglasfritte nach einem der Ansprüche 22 bis 24, **dadurch gekennzeichnet, dass** ihre mittlere Sintertemperatur 500 bis 600 °C und vorzugsweise zwischen 540 und 580 °C beträgt.

26. Verwendung einer Glasfritte, um in wenigstens einem Bereich mindestens einer Seite eines Glasfeldes eine rauhe Beschichtung auszubilden, bei welcher die Rauhtiefe des/der aufgerauhten Bereichs/Bereiche von den Teilchen der Glasfritte bestimmt wird.

27. Verwendung nach Anspruch 26 einer Basisglasfritte, deren Eigenschaften in einem der Ansprüche 22 bis 25 genannt sind.

28. Verwendung des Glasfeldes nach einem der Ansprüche 1 bis 10 als rutschsichere Platte, insbesondere für Fußböden, Treppenstufen, Tanzflächen, Fußwege, Duschkabinen- oder Schwimmbadböden und Industriefußböden.

## Claims

1. Glass panel incorporating at least one glass sheet (1), whereof at least one of its faces (2) has at least one rough area (4) provided with a coating based on a glass frit, characterized in that the roughness of said rough area or areas (4) is determined by the particles of said basic glass frit.

2. Glass panel according to claim 1, characterized in that said glass sheet (1) has undergone a heat treatment, preferably tempering.

3. Glass panel according to claim 1 or 2, characterized in that said coating comprises at least one additional glass frit, whose melting point is lower than that of the basic frit.

4. Glass panel according to one of the preceding claims, characterized in that said rough area or areas (4) are coloured and/or opacified.

5. Glass panel according to one of the preceding claims, characterized in that it comprises several rough areas (4) partly covering said face (2) of said glass sheet (1), preferably 50% of the surface thereof.

6. Glass panel according to claim 6, characterized in that said rough areas (4) are or are not uniformly distributed.

7. Glass panel according to claim 6 or 7, characterized in that at least one of said rough areas (4) has a precise geometrical shape, particularly a circular element.

8. Glass panel according to one of the claims 5 to 7, characterized in that said glass sheet (1) has a dynamic friction coefficient increased by at least 25%, particularly approximately 33% compared with that of the uncoated glass sheet (1).

9. Glass panel according to one of the claims 1 to 4, characterized in that it comprises a single rough area (4) totally covering said face (2) of said glass sheet (1).

10. Glass panel according to claim 9, characterized in that said glass sheet (1) has a dynamic friction coefficient increased by approximately 50% compared with that of said uncoated glass sheet (1).

11. Process for the production of the panel according to one of the preceding claims, characterized in that the following steps are performed:
a) on the glass sheet (1) a medium is deposited in the area or areas where it is wished to obtain roughness,
b) on the glass sheet (1) are distributed particles of the constituents of the coating, namely essentially the basic class frit;
c) the excess of particles of constituents which have not adhered as a result of the medium is eliminated;
d) a heat treatment is performed on the glass sheet (1), particularly so as to soften the frit particles and make them adhere to said glass sheet (1).

12. Process according to claim 11, characterized in that a viscosity of the medium is chosen between 80 and 140 poises, particularly between 90 and 130 poises and preferably between 100 and 120 poises.

13. Process according to claim 11 or 12, characterized in that to said basic glass frit is added at least one additional glass frit, whose melting point is lower than that of the basic frit.

14. Process according to one of the claims 11 to 13, characterized in that the glass sheet is heat treated for tempering purposes.

15. Process according to claim 14, characterized in that the heat treatment is performed at a temperature of approximately 630°C.

16. Process according to one of the claims 11 to 15, characterized in that the heat treatment is carried out for a treatment time between 34 and 46 sec, preferably 40 sec/mm of thickness of the glass sheet.

17. Process according to one of the claims 11 to 16, characterized in that particles having different grain size distributions are mixed.

18. Process according to one of the claims 11 to 17, characterized in that use is made of a basic glass frit having an average firing temperature lower than the heat treatment temperature of the glass frit by a maximum of 100° and preferably approximately only 70°C.

19. Process according to any one of the claims 11 to 18, characterized in that the basic glass frit has a softening point lower by 60 to 120°C than the heat treatment temperature of the glass and preferably approximately 90°C lower and in that it has an end of firing temperature only 10 to 50°C lower than the heat treatment temperature.

20. Process according to any one of the claims 11 to 19, characterized in that the basic glass frit has an average firing temperature between 500 and 600°C, preferably between 540 and 580°C.

21. Process according to any one of the claims 11 to 20, characterized in that the frit contains in substantially equal proportions forming oxides of the SiO₂ type and modifying oxides.

22. Basic glass frit used for performing the process according to any one of the claims 11 to 21, characterized in that the frit has an average firing temperature lower than the heat treatment temperature of the glass sheet by a maximum of 100°C and preferably approximately only 70°C and in that the frit has a grain size analysis of its particles above 100 µm, particularly 200 µm and preferably between 250 and 400 µm.

23. Basic glass frit used for performing the process according to any one of the claims 11 to 21, characterized in that the frit has an average firing temperature lower than the heat treatment temperature of the glass sheet by a maximum of 100°C and preferably approximately only 70°C and in that the frit incorporates in weight percentages the following elements:
| | |
|---|---|
| PbO | 50 to 70% |
| CdO | 5 to 10% |
| SiO₂ | 25 to 50% |
| B₂O₃ | 2.5 to 5% |
| TiO₂ | 2.5 to 5% |
| Na₂O | 2.5 to 5% |

24. Basic glass frit according to claim 23, characterized in that the frit has a grain size analysis of its particles above 100 µm, particularly 200 µm and preferably between 250 and 400 µm.

25. Basic glass frit according to one of the claims 22 to 24, characterized in that it has an average firing temperature between 500 and 600°C, preferably between 540 and 580°C.

26. Use of a glass frit for forming, on at least one area of at least of the faces of a glass panel, a rough coating, in which determination takes place of the roughness of the rough area or areas by particles of the glass frit.

27. Use according to claim 26 of a basic glass frit, whose characteristics are mentioned in any one of the claims 22 to 25.

28. Use of the panel according to any one of the claims 1 to 10 as a nonslip panel or slab, particularly for floors, staircase steps, dance floors, pedestrian paths, shower, swimming pool or industrial floors.
